# EUROPEAN PATENT APPLICATION

(11) **EP 2 833 242 A1**
(43) Date of publication of application: **04.02.2015**
(21) Application number: 13837028.3
(22) Date of filing: 23.08.2013
(51) Int. Cl.: G06F 3/01

(54) **METHOD FOR TRANSFERRING PLAYING OF DIGITAL MEDIA CONTENTS AND PLAYING DEVICE AND SYSTEM**

(30) Priority: 12.09.2012 CN 201210336361
(71) Applicant: ZTE Corporation, Shenzhen, Guangdong 518057 (CN)
(72) Inventor: LIU, Haijun, Shenzhen Guangdong 518057 (CN); ZHOU, Yunjun, Shenzhen Guangdong 518057 (CN)
(74) Representative: Jones, Cerian
(86) International application number: PCT/CN2013/082161
(87) International publication number: WO 2014/040485

(57) **Abstract**

A method for transferring playing of digital media contents, a playing device and system. The method includes: after a first device identifies a first indication and/or a second device identifies a second indication, the second device playing digital media contents indicated by the first device to the second device; the first device identifying the first indication means: judging that video data captured by a camera module are video data which conform to a predefined sending hand gesture or a predefined sending body action; and/or, judging that point-touch data of a touch screen captured by a touch screen processing module are data which conform to a predefined sending operation event. The second device identifying the second indication means: judging that video data captured by the camera module are video data which conform to a predefined receiving hand gesture or a predefined receiving body action, and/or judging that point-touch data of the touch screen captured by a touch screen processing module are data which conform to a predefined receiving operation event. The abovementioned solution can improve ease of the use of the digital media content device and improve the user experience.

## Description

### Technical Field

The present invention relates to the field of communication and information, and more particularly, to a method for transferring playing of digital media contents, a playing device and system.

### Background of the Related Art

The development of digital multimedia and network enriches entertainment experience in people's daily life. The present technology allows people to watch high-definition TV at home, and the source of television programs may come from digital discs, cable TV, Internet, and so on, and can experience the stereo, 5.1 track, 7.1 track and even more realistic sound effects, moreover, people can also use a panel electronic device (PAD) or a mobile phone to achieve these experiences, and people can transfer the playing of digital contents between different devices over the network, and can use the remote control and hand gesture to control the playing of a device, such as controlling to switch to the program on the previous channel or the next channel, and so on.

One common traditional mode for controlling multiple devices is respectively using the remote control of each device to control, and usually these remote controls are not interchangeable, and most of the remote controls such as the traditional TV and the stereo do not have the network function; there are also some remote controls supporting the network, for example, a software tool supporting interworking protocols is loaded on a device (such as a mobile phone or a PAD) having computing and networking capabilities to control another device.

With the development of technology, there are more and more demands for sharing and transferring the content playing between multiple devices, the abovementioned control mode is obviously not easy enough, people either need to pick out a remote control corresponding to the device in a pile of remote controls and continually change the remote control for controlling different devices, or only the people who are familiar with the basic computer operation can operate control devices such as the PAD and the mobile phone to control a single device. It is more desirable to use a simpler and more natural operation mode to control the sharing and transferring of the content playing.

If it is able to provide a simpler and more natural control mode to control the functions such as transferring the content playing and coordinating the playing between the devices, it will make people's entertainment life easier and more enjoyable.

### Summary of the Invention

To solve the technical problem, the present invention provides a method for transferring playing of digital media contents, a playing device and system, to provide a new solution for operating a digital media content device easily.

To solve the abovementioned technical problem, the present invention provides a method for transferring playing of digital media contents, comprising: after a first device identifies a first indication and/or a second device identifies a second indication, the second device playing digital media contents indicated by the first device to the second device;

Said a first device identifying a first indication refers to: by analyzing video data captured by a camera module, the first device acquiring that the video data are video data which conform to a predefined sending hand gesture or a predefined sending body action, and/or, by analyzing point-touch data of a touch screen captured by a touch screen processing module, the first device acquiring that the data are data which conform to a predefined sending operation event;

Said a second device identifying a second indication refers to: by analyzing video data captured by a camera module, the second device acquiring that the video data are video data which conform to a predefined receiving hand gesture or a predefined receiving body action, and/or, by analyzing point-touch data of a touch screen captured by a touch screen processing module, the second device acquiring that the data are data which conform to a predefined receiving operation event.

Preferably, the abovementioned method may further have the following feature:
the predefined sending hand gesture refers to an action of figure sweeping, or figure pinching, or figure grabbing, figure closing or two hands closing.

Preferably, the abovementioned method may further have the following feature:
said conforming to the predefined sending operation event refers to a one-touch event, a multi-touch event, a translation event or a multi-point translation aggregation event.

Preferably, the abovementioned method may further have the following feature:
the predefined receiving hand gesture refers to an action of throwing, dropping, or pointing, or hand opening.

Preferably, the abovementioned method may further have the following feature:
the predefined receiving operation event is a one-touch event, a multi-touch event, a translation event or a multi-point translation dispersion event.

Preferably, the abovementioned method may further have the following feature:
the method further comprises the following execution process: after the first device identifies the first indication, the first device sending a request message for transferring the playing of digital media contents; after the second device receives the request message and identifies the second indication, the second device responding with a response of receiving the request message to the first device, after the first device receives the response, the first device indicating the digital media contents to the second device;
   or,
after the second device identifies the second indication, the second device sending the first device a request message for transferring the playing of the digital media contents; after the first device receives the request message and identifies the first indication, the first device responding with a response of receiving the request message to the second device, and indicating the digital media contents to the second device.

Preferably, the abovementioned method may further have the following feature:
the method further comprises the following execution process: after the first device identifies the first indication, the first device sending the second device a request message for transferring the playing of the digital media contents, and indicating the digital media contents to the second device.

Preferably, the abovementioned method may further have the following feature:
the method further comprises the following execution process: after the second device identifies the second indication, the second device sending the first device a request message for transferring the playing of the digital media content, after the first device receives the request message, the first device indicates the digital media content to the second device.

Preferably, the abovementioned method may further have the following feature:
the request message comprises a type indication of the digital media contents, and the type indication comprises one or a combination of the following parameters: image, video, audio, and desktop.

Preferably, the abovementioned method may further have the following feature:
the first device indicating the digital media contents refers to the first device sending the second device the digital media contents which are being played on the first device, or the first device sending the second device an address of the digital media contents;
the digital media contents are local digital media contents of the first device, or digital media contents obtained by the first device through a network.

To solve the abovementioned technical problem, the present invention further provides a playing device as a source device, the playing device comprises a camera module and/or a touch screen processing module, and the playing device further comprises a data transmission indication identifying module and a network module;
the data transmission indication identifying module is configured to: identify a first indication, which specifically refers to: by analyzing video data captured by the camera module, acquiring that the video data are video data which conform to a predefined sending hand gesture or a predefined sending body action, and/or, by analyzing point-touch data of the touch screen captured by the touch screen processing module, acquiring that the data are data which conform to the predefined sending operation event;
the network module is set to: after the data transmission indication identifying module identifies the first indication, indicate the digital media contents to a target playing device.

Preferably, the abovementioned device may further have the following feature:
the predefined sending hand gesture refers to an action of figure sweeping, or figure pinching, or figure grabbing, figure closing or two hands closing.

Preferably, the abovementioned device may further have the following feature:
said conforming to the predefined sending operation event refers to a one-touch event, a multi-touch event, a translation event or a multi-point translation aggregation event.

Preferably, the abovementioned device may further have the following feature:
the network module is further configured to: send the target playing device the digital media contents which are currently being played by the playing device or an address of the digital media contents; the digital media contents are local digital media contents of the playing device or digital media contents obtained through the network.

To solve the abovementioned technical problem, the present invention further provides a playing device as a target device, and the playing device comprises a camera module and/or a touch screen processing module, the playing device further comprises a data transmission indication identifying module, a network module, and a playing control module;
the data transmission indication identifying module is configured to: identify a second indication, which specifically refers to: by analyzing video data captured by the camera module, acquiring that the video data are video data which conform to a predefined receiving hand gesture or a predefined receiving body action, and/or, by analyzing point-touch data of a touch screen captured by the touch screen processing module, acquiring that the data are data which conform to a predefined receiving operation event;
the network module is configured to: after the data transmission indication identifying module identifies the second indication, receive an indication from a correspondent device;
the playing control module is configured to: play digital media contents indicated by the correspondent playing device.

Preferably, the abovementioned device may further have the following feature:
the predefined receiving hand gesture refers to an action of throwing, dropping, pointing, or hand opening.

Preferably, the abovementioned device may further have the following feature:
the predefined receiving operation event is a one-touch event, a multi-touch event, a translation event, a multi-point translation dispersion event.

Preferably, the abovementioned device may further have the following feature:
The indication from the correspondent device refers to digital media contents which are being played on the correspondent device or an address of the digital media contents;
the playing control module is further configured to: when the indication from the correspondent device refers to the digital media contents which are being played on the correspondent device, play the digital media contents; when the indication from the correspondent device is the address of the digital media contents, obtain and play the digital media contents corresponding to the address.

To solve the abovementioned technical problem, the present invention further provides a system for transferring playing of digital media contents, comprising the abovementioned source device and the target device.

To sum up, the embodiments of the present invention make the digital media content device more easily be manipulated, improve the usability of the digital media content device, and improve the user experience.

### Brief Description of Drawings

FIG. 1 is a schematic diagram of a method for transferring the playing of digital media contents in accordance with the present scheme;
FIG. 2 is a schematic diagram of a sweeping hand gesture operation on the first device in accordance with an example of the present scheme;
FIG. 3 is a schematic diagram of a pinching hand gesture operation on the first device in accordance with an example of the present scheme;
FIG. 4 is a schematic diagram of a throwing hand gesture operation on the second device in accordance with an example of the present scheme;
FIG. 5 is a schematic diagram of a dropping hand gesture operation on the second device in accordance with an example of the present scheme;
FIG. 6 is a schematic diagram of a pointing hand gesture operation on the second device in accordance with an example of the present scheme;
FIG. 7 is a schematic diagram of an opening-hand gesture operation on the second device in accordance with an example of the present scheme.
FIG. 8 is a structural diagram of a playing device in accordance with the present scheme.

### Preferred Embodiments of the Invention

Hereinafter, in combination with the accompanying drawings and the embodiments, the present invention will be described in detail.

For clarity, not all of the routine features of the device are illustrated or described here. Of course, it should be understood that in the development of any practical device, it is necessary to make a decision for a specific implementation to achieve the specific targets of the developer, such as constraints compliant with applications and services, and these specific targets vary depending on different implementations, and change with different developers. Moreover, it should be understood that such a development work is complex and time consuming; nevertheless, the technical work carried out by a person with ordinary skill due to the inspiration of the present disclosure is conventional.

According to the subject matter described herein, various types of operating systems, computing platforms, computer programs, and/or versatile machines can be used to manufacture, operate and/or perform various components, systems, devices, processing steps and/or data structures. Furthermore, those with ordinary skill in the art will understand that less versatile devices can also be used without departing from the scope and spirit essence of the inventive concepts disclosed herein. Wherein the method is performed by a computer, system or machine, and the method may be stored as machine-readable instructions that can be stored in a determined media, such as computer memory devices, including but not limited to, ROM (Read Only Memory, FLASH memory, or transferring device, etc.), magnetic storage media (such as tape, magnetic disk drives, etc.), optical storage media (such as, CD-ROM, DVD-ROM, paper card, paper tape, etc.), and other well known types of program memories. Moreover, it should be appreciated that the method can be performed by a human operator by selecting software tools, without need for human or creative judgments.

It should be noted that, in the case of no conflict, the embodiments and features in the embodiments of the present application may be arbitrarily combined with each other.

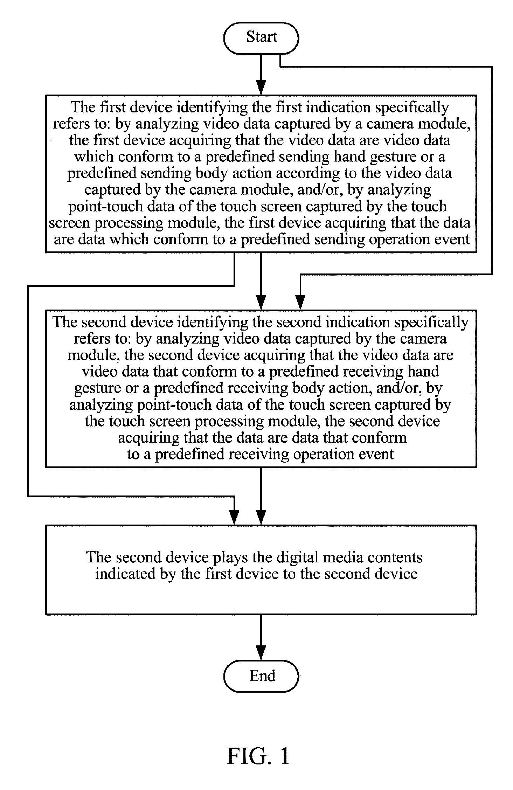

As shown in FIG. 1, the present method relates to the first device and the second device. The first device and the second device are configured with a camera module and/or a touch screen processing module.

The first device has the ability to play digital media contents, and can also be configured with a camera module to identify the first indication according to the data captured by the camera module, or configured with a touch screen processing module to identify the first indication according to the data captured by the touch screen processing module, the first device is connected with the second device through a wired or wireless network, such as a network having network interfaces supporting both IEEE 802.11b/g/n and IEEE 802.3, so as to be able to connect to an IP network.

The second device has the ability to play digital media contents, and can also be configured with a camera module to identify the second indication according to the data captured by the camera module, or configured with a touch screen processing module to identify the second indication according to the data captured by the touch screen processing module, the second device is also connected with the first device through a wired or wireless network, for example, a network with network interfaces supporting both IEEE 802.11b/g/n and IEEE 802.3, so as to be able to connect to the IP network.

The method for transferring the playing of digital media contents comprises: after the first device identifies the first indication and/or the second device identifies the second indication, the second device playing the digital media contents indicated by the first device to the second device;
the first device identifying the first indication refers to: by analyzing video data captured by a camera module, the first device acquiring that the video data are video data which conform to a predefined sending hand gesture or a predefined sending body action, and/or, by analyzing point-touch data of the touch screen captured by the touch screen processing module, the first device acquiring that the data are data which conform to a predefined sending operation event;
the second device identifying the second indication refers to: by analyzing video data captured by the camera module, the second device acquiring that the video data are video data which conform to a predefined receiving hand gesture or a predefined receiving body action, and/or, by analyzing point-touch data of the touch screen captured by the touch screen processing module, the second device acquiring that the data are data which conform to a predefined receiving operation event.

Wherein, the first device indicating the digital media contents to the second device refers to: the first device sending the second device the digital media contents which are being played on the first device, or the first device sending the second device the address of the digital media contents; the digital media contents are the local digital media contents of the first device, or the digital media contents obtained by the first device through the network. When the second device receives the digital media contents which are being played on the first device, it directly plays the received digital media contents. When the second device receives the address of the digital media contents, it obtains and plays the corresponding digital media content according to the address.

The digital media contents can be one or a combination of: image, video, audio, and desktop.

The predefined sending hand gesture is an action of user hand sweeping, pinching, grabbing, figure closing or two hands closing.

Said conforming to the predefined sending operation event refers to a one-touch event, multi-touch event, translation event or multi-point translation aggregation event.

The predefined receiving gesture refers to an action such as throwing, dropping, pointing or finger opening.

The predefined receiving operation event is a one-touch event, multi-touch event, translation event or multi-point translation dispersion event.

The first device and the second device can perform a two-way information exchange negotiation, for example, after the first device identifies the first indication, it sends the second device a request message for transferring the playing of digital media contents; after the second device receives the request message and identifies the second indication, it replies to the first device with a response of receiving the playing request, after the first device receives the response, it indicates the digital media contents to the second device. Alternatively, after the second device identifies the second indication, it sends the first device a request message for transferring the playing of the digital media contents; after the first device receives the request message and identifies the first indication, it replies to the second device with a response of receiving the playing request, and indicates the digital media contents to the second device.

The first and second devices can perform a one-way information exchange negotiation, for example, after the first device identifies the first indication, it sends the second device a request message for transferring the playing of the digital media content, and indicates the digital media contents to the second device. For another example, after the second device identifies the second indication, it sends the first device a request for transferring the playing of the digital media contents, after the first device receives the request message, it indicates the digital media contents to the second device.

In the abovementioned negotiation process, the request message can contain the type indication of the digital media contents, the type indication comprises one or a combination of the following parameters: image, video, audio, desktop.

The first device and the second device may not negotiate, that is, under the premise that both parties are defaulted as the communication parties (or even under the premise that both the source and target devices are defaulted), after the first device identifies the first indication and/or the second device identifies the second indication, the second device plays the digital media contents indicated by the first device to the second device.

For example, the first device is a PAD, and the second device is a TV.

The digital media contents are played on the PAD, and the digital media contents may be a video file stored in the local, a video stream from the IP network, a local audio file, an audio stream from the IP network, or the desktop of the operating system.

The PAD has a touch screen and also a camera. The user can use his/her fingers to make an action such as grabbing, pinching, sweeping on the touch screen, and he/she can also make a grasping action with hand in front of the camera.

The PAD has the triggering ability of transferring the playing of digital media contents, which refers to here that the PAD is able to receive the hand action on the touch screen, or obtain a moving image by the camera, so that it is able to judge out the indication that it is ready to identify and transfer the playing of digital media contents according to what is predefined.

There are network interfaces on the PAD to support the IEEE 802.11b/g/n and the IEEE 802.3, so as to be able to connect to the IP network. The modules within the PAD also have the network service capability, and the network service capability enables it and other devices to discover each other and connect with each other, and after receiving the indication that it is triggered to be ready to transfer the playing, broadcast the message to other devices.

As the second device, the TV has a camera. The user can use hands to perform an action such as throwing, dropping, or pointing in front of the camera. The TV has the capability to identify and transfer digital media content playing, here, it is that the TV can obtain moving images through the camera, so as to identify that there are digital media contents to be transferred to the local TV to play according to the predefinition, that is, knowing that digital media contents are going to be transferred to the local device, this identification combines with context scenarios, comprising identifying the throwing action and the dropping action of the hand. The TV has a touch screen, and the user's hand pointing action or hand opening action on the touch screen can be captured via the touch screen.

There are network interfaces on the TV to support IEEE 802.11b/g/n and IEEE 802.3, so that the TV can connect to the IP network. The modules within the TV also have the network service capability, and the network service capability enables it and other devices to discover each other and connect with each other, and receive the PAD's broadcast message, and respond to the broadcast message, it is also enabled to send a confirmation message to the PAD after identifying the intention of transferring sent by the user, and work with the PAD together to eventually transfer the playing of the digital media contents.

The PAD and the TV are connected to each other through the network. The PAD and TV's network service capabilities comprise:
1) enabling the PAD and the TV to communicate with each other through the network;
2) negotiating the control operation of the playing of the digital media contents through the network;
3) transmitting the digital media contents.

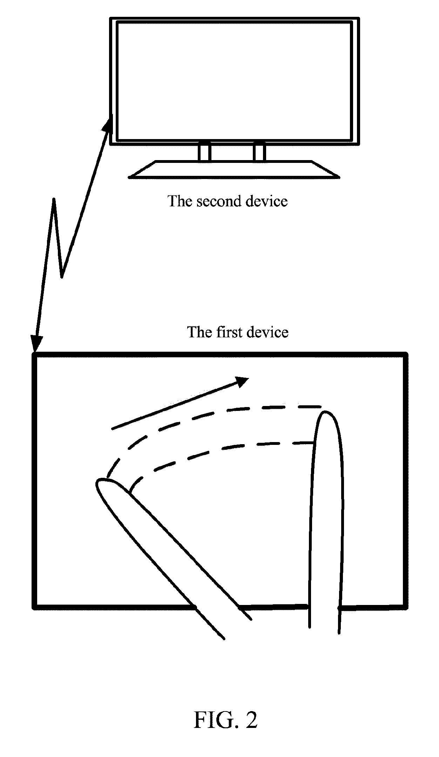

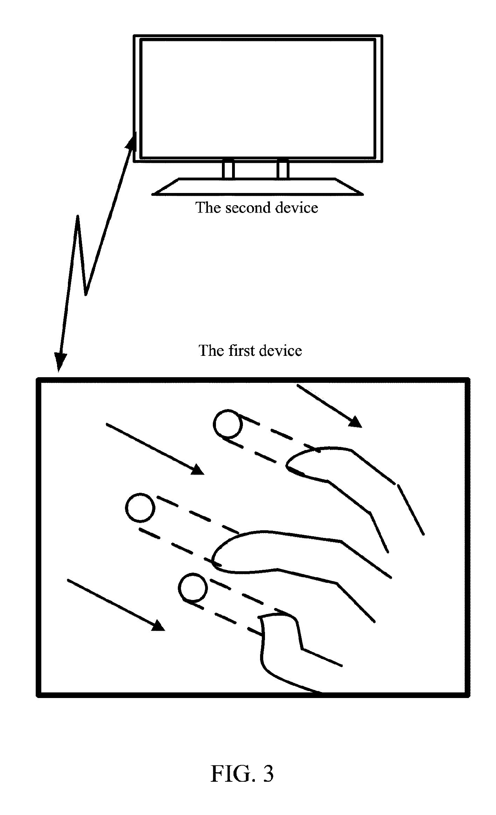

The actions that can be identified by the PAD are respectively as follows:
1) sweeping: the user's hand sweeps across the window or icon corresponding to the digital media contents on the PAD touch screen; as shown in FIG. 2.
   On the PAD, this action of sweeping is detected as a resistance or current by the touch screen, so as to identify the touch point and moving trajectory, and then judge the gesture of operation.
2) pinching: it is to perform the action of pinching and lifting with three, four or five fingers on the screen, as shown in FIG. 3.

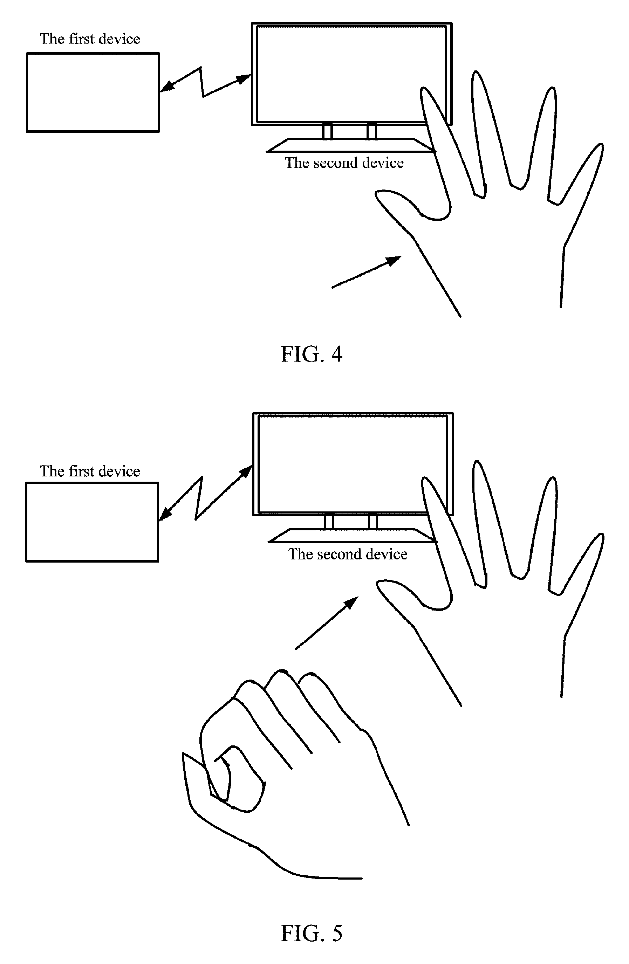

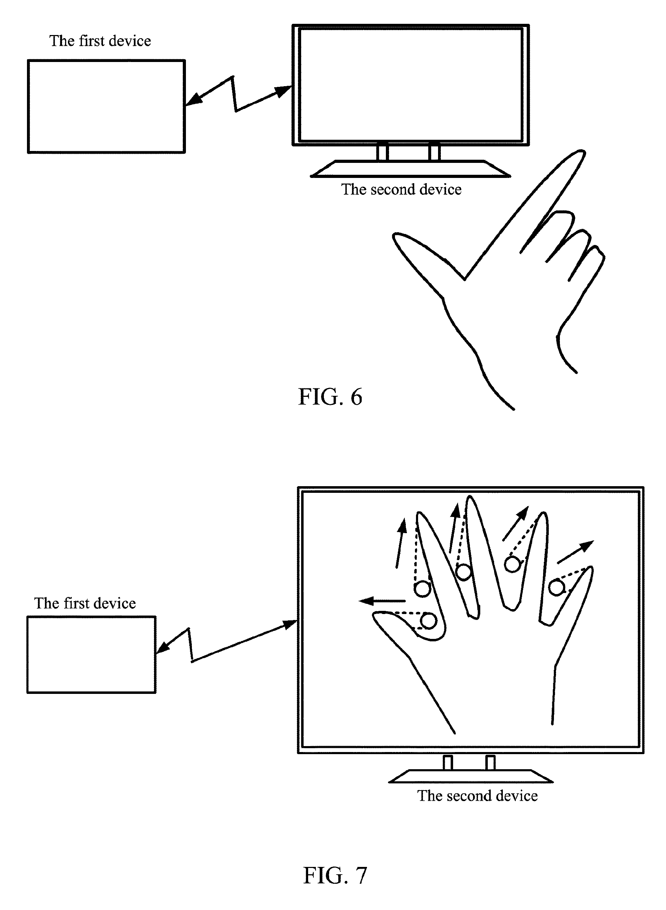

The actions can be identified by the TV are:
1) throwing: the user faces the TV camera to make the throwing action with hand; as shown in FIG. 4.
2) dropping: the user first keeps the grabbing or pinching gesture in the first group, and then faces the TV camera to make the dropping action with hand; as shown in FIG. 5.
3) pointing: the user faces the TV camera to make the pointing action with hand; as shown in FIG. 6.
4) opening: if the TV screen has a touch screen, it is to first fold five fingers, and then make the opening action with the fingers on the touch screen; as shown in FIG. 7.

The gestures action identification can use histogram or hidden Markov model scheme. First, the user's hand gesture should fall within the range that the camera can capture, thus the camera is able to generate and send the gesture video to the identifying module, the identifying module identifies the location of the hand by means of analyzing the hand gesture images in video with respect to color, contours, or structured light, and detects and segments the hand gesture object, extracts the hand gesture feature, tracks the hand gesture movement; then processes the finger direction and the movement direction sequence, and finally completely identifies the hand gesture, at this time, a method such as spatially comparing with predefined hand gestures can be used to determine the intention of user's actions and operations.

Besides of the abovementioned hand gesture actions, eye movements, body posture and other actions can also be used.

For both sets of actions, with respectively choosing one from each group to combine, it is able to complete the transfer control of the digital media contents, for example, it is to select the 1) of the first group to make the actions on the PAD, and then it is to face the TV camera and make the action 2) in the second group. The PAD sends the digital media contents that are currently being played to the TV, and the TV plays the digital media contents.

In the following, the specific embodiments will be described in detail.

### First specific embodiment

The first device is the PAD, and the second device is the TV. In this embodiment, the digital media contents are on the PAD, the user manipulates to transfer the digital media contents from the PAD to the TV, and for the user, the using scenario and experience are: in the living room at home, the user is sitting on the couch, and using the PAD to watch home videos on the PAD, when he uses his fingers to grab on the PAD screen on which the video is being played, and then raises his hand to make a throwing movement towards the direction of the TV camera, then the digital media contents which were played on the PAD are now being played on the TV, and the user directly watches the video contents which are being played on the TV. This process does not require the user to identify the menu on the screen, or click the button on the screen, or use the remote control.

In a specific embodiment, the devices PAD and TV are connected with each other through the network, and can communicate with each other. The implementation process of this specific embodiment comprises steps 1 to 5.

In Step 1, the user demonstrates the first action on the PAD, and the PAD identifies the intention of this action: the video which is currently being played needs to be played on another device.

Herein the first action may be any action in the first set of actions in the abovementioned embodiment. The PAD can support one action therein, and support at least one action therein. The identification of these actions is predefined in the PAD in combination with the context, and some actions use the image identification algorithm, so that the PAD can identify the meaning of the action, namely, the currently played video requires to be played on another device.

This step relies on a triggering capability of transferring the playing of the digital media contents of the PAD (i.e., the first device), and the triggering capability refers to the capability of receiving or identifying the indication that it is ready to transfer the playing, comprising that the PAD has a touch screen, and the hand performs actions such as grabbing or sweeping on the touch screen; and triggering the first device to know the intention of transferring the playing of the digital media contents.

With the completion of this step, the first device completes receiving the indication that is is ready to transfer the playing of the digital media contents (such as the touch screen operation); alternatively, the first device identifies the indication that it is ready to transfer the playing of the digital media contents.

In Step 2, the PAD device sends a broadcast message: READY PLEASE message

After the PAD identifies the action and identifies the intention of transferring the playing of the digital media contents, it turns on the network service function, sends the broadcast/multicast message at the pre-specified address and port, and the information contained in the message is used to inform other devices to be ready to identify the receiving action.

This message is called READY PLEASE in the present invention, the information contained in the message comprises:
name, address, and port of the local device; which is a sending address of the READY PLEASE message played by the digital media contents, as well as an address for subsequently receiving the response message;
an indication of the digital media content types; which can be one or a combination of the following: image, moving image, sound, or desktop;
an attribute of digital media content, which, when the type is image, is an image encoding scheme; when the type is moving image, is an image encoding scheme, frame rate, and so on; when the type is sound, is an audio encoding scheme, and/or sampling rate, and so on; when the type is desktop, is a size and resolution of the desktop, and so on; when the type is a combination, is a corresponding parameters of various types in the combination;
transport protocol parameters for sending the digital media contents, which comprise address, port, and other protocol parameter sets; wherein, if a transfer of the digital media contents is finally confirmed, the parameters listed here will be used to send the digital media contents;
a timeout; which indicates the effective time of the READY PLEASE message, that is, after a specified period of time, this transfer intention will be invalid (canceled).

Before the completion of this step, the PAD and TV's network capability can make the PAD and the TV interconnect with each other, and likewise, relying on the device's network capability, after receiving the indication that it is triggered to be ready to transfer the playing of the digital media contents on the local device, the PAD sends a message indication to ask the other device including the TV be ready to receive or identify the hand gestures through the network, that is, the other device needs to confirm whether it is capable of receiving the transfer of the digital media contents or not.

Briefly, in this step, the first device sends an instruction to ask the other device to confirm whether it is able to receive the transfer of the digital media contents or not.

In Step 3, the TV identifies the second action.

The second action here may be any action in the second set of actions in the aforementioned embodiment. The TV can support one action therein, and support at least one action therein. The identification of these actions is predefined in the TV in combination with the context, and such context comprises that the TV starts the identification function after the camera receives the broadcast message sent from the PAD; the action identification uses the image identification algorithm, so that the TV is able to identify the meaning represented by the action, namely, the currently played video will be transferred to the local device to be played.

In this step, the second device identifies that the digital media contents will be transferred to the local device.

In Step 4, after the TV identifies, it sends a message (this message may be a broadcast message): PAIRED OK.

The TV identifies the action specified for this device, that is, it identifies the intent of transferring the playing of the digital media content device to the local device, if the local device is capable of receiving the digital media contents in the broadcast message sent by the PAD previously, it starts the network service function, and sends a response message, that is, the message called PAIRED OK in the present invention, to the PAD at the pre-specified address and port, the information included in the message is used to answer the PAD: and the local device confirms to receive the digital media contents.

The information included in the message comprises:
name, address and port of the local device; which is a sending address of the PAIRED OK message, as well as an address for subsequently message interacting;
an indication of the type of digital media contents that can be received; which can be one or a combination of image, moving image, sound, desktop, and through which the TV confirms the content type to the PAD;
an attribute of the digital media content; which, for the image type, is an image encoding scheme; for the moving image type, is an image encoding scheme, the frame rate, and so on; for the sound type, is an encoding scheme and/or sampling rate, and so on; for the desktop type, is a size and resolution of the desktop and so on; and through which the TV confirms the content attribute to the PAD;
a transport protocol for receiving the transmitted digital media contents, which comprises address, port, and other protocol parameter sets, wherein if the transfer of the digital media contents is finally established, the parameters listed here will be used to receive; and through which the TV confirming the content transport protocol to the PAD;
a timeout; which represents an effective time of the message, that is, after a specified period of time, the intention of being capable of receiving the digital media contents will be invalid (canceled).

In this step, the second device confirms to the first device that it is ready to receive the digital media contents.

In Step 5, the digital media contents are transferred.

After the PAD and the TV confirm with network messages, the PAD and the TV begin to transfer the digital media contents until it is completed or aborted.

The transfer of the digital media contents uses the media transport protocol for message negotiation between the aforementioned PAD and the TV, for example, it can use the Real Time Transport Protocol/Real time Transport Control Protocol (RTP/RTCP), HTTP Adaptive Streaming (HAS), File Transport Protocol (FTP), WiFi Display, Wireless Home Digital Interface (WHDI), Wireless High Definition (WiHD), and so on.

For controlling the digital media playing such as fast-forwarding, rewinding, volume adjusting, functions in the media transport protocol can be used to control the PAD or the TV, it can also be completely controlled by the TV, at this time, the TV needs to cache the transferred digital media contents.

When the playing or the transmission of the digital media contents on the PAD ends, the PAD can send a message to the TV, notifies the TV that the playing ends, and closes the network connection.

If the digital media contents on the PAD come from another content source device in the network, a way of tripartite consultation can be used to transfer the digital media contents on another content source device to the TV to play, under this situation, the PAD can no longer participate in the playing and control of the digital media contents.

### Second specific embodiment

The user first implements hand gestures to the TV, namely, first, pointing out the target device, and then implementing a hand gesture to the PAD, that is, pointing out the source device, both parties complete the transfer negotiation, and the PAD indicates the digital media contents to the TV, and the TV plays the contents. The specific implementation is similar to that in the first specific embodiment and will not be repeated here.

### Third specific embodiment

The PAD is defaulted as the source device, the user only makes hand gestures on the TV to indicate that it needs to transfer the digital media contents to the TV to play, after the TV identifies this indication, it broadcasts the message to the PAD, and the PAD responds to this broadcast message, both parties complete the transfer negotiation, the PAD indicates the digital media contents to the TV, and the TV plays the contents. The specific implementation is similar to that in the first specific embodiment and will not be repeated here.

### Fourth specific embodiment

The TV is defaulted as the target device, the user only makes a hand gesture on the PAD to indicate that it needs to transfer the playing of the digital media contents, after the PAD identifies this indication, it broadcasts the message to the TV, and the TV responds to the broadcast message, both parties complete the transfer negotiation, and the PAD indicates the digital media contents to the TV, and the TV plays the contents. The specific implementation is similar to that in the first specific embodiment and will not be repeated here.

### Fifth specific embodiment

The PAD is defaulted as the source device, and the TV is defaulted as the target device, the user makes hand gesture indication on any one of the two devices, after the two devices negotiate, the PAD indicates the digital media contents to the TV, and the TV plays the contents. The specific implementation is similar to the first specific embodiment and will not be repeated here.

The abovementioned specific embodiments comprise the negotiation process of two devices interacting in two-way, it should be noted that the abovementioned specific embodiments may also use the negotiation process of one-way interaction, or remove the negotiation process under the premise that the two parties are defaulted as the communication parties (even under the premise that the source and target devices are defaulted in the two parties).

In the abovementioned specific embodiments, the PAD is used as the first device, and the present invention is not limited to the first device being a PAD device, a cell phone, a player with touch screen, a playing device using the mobile phone or the touch screen as the remote control, or even a computer can be used as the first device, the triggering function in the aforementioned process can also be achieved by the keyboard and mouse on the computer.

In the abovementioned specific embodiments, the TV is used as the second device, and the present invention is not limited to the second device being a TV device, as long as a camera is configured, a mobile phone, a set-top box, a projector, or a computer which has various capabilities described in the embodiments herein can be used as the second device.

The abovementioned embodiments, if network-related, are suitable to the IP network supported by communications networks such as IEEE 802.3, IEEE 802.11b/g/n, POWELINE, CABLE, PSTN, 3GPP (3rd Generation Partnership Project) network and 3GPP2 network, and the operating system of each device can be applied as UNIX operating system, WINDOWS operating system, ANDROID operating system, IOS operating system, and the consumer interface can be applied as JAVA language interface.

The abovementioned processes are embodiments to achieve the present invention, and are not limited to be implemented with the embodiments, and are not used to limit the methods for executing the specific process, the present invention can also be realized in a similar manner, for example, indicating the names of the modules and the types of various message, all these are only different naming forms, and specific message contents.

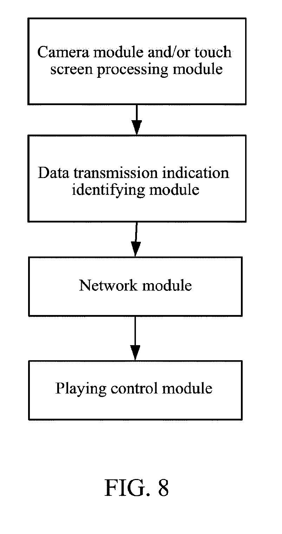

As shown in FIG. 8, the playing device that can be used as the source device comprises a playing control module for playing the digital media contents, and further comprises a camera module and/or a touch screen processing module, the playing device further comprises a data transmission indication identifying module and a network module.

The data transmission indication identifying module is used for identifying the first indication, which specifically refers to acquiring that the video data are video data which conform to the predefined sending hand gesture or predefined sending body action by analyzing the video data captured by the camera module, and/or, acquiring that the data are data which conform to the predefined transmission operation event by analyzing the point-touch data of the touch screen captured by the touch screen processing module;
the predefined sending hand gesture is an action of sweeping, pinching, grabbing, figure closing or two hands closing of the user.

Said conforming to the predefined sending operation event refers to a one-touch event, a multi-touch event, a translation event, or a multi-point translation aggregation event.

The network module is used to, after the data transmission indication identifying module identifies the first indication, indicate the digital media contents to the target playing device. The network module is further used to send the digital media contents which are being played on the playing device or the address of the digital media contents to the target playing device; the digital media contents are the local digital media contents of the playing device or the digital media contents obtained through the network.

As shown in FIG. 8, the playing device that can be used as the target device comprises a camera module and/or a touch screen processing module, the playing device further comprises a data transmission indication identifying module, a network module, and a playing control module.

The data transmission indication identifying module is used for identifying the second indication, which specifically refers to acquiring that the video data are video data which conform to the predefined receiving hand gesture or the predefined receiving body action by analyzing the video data captured by the camera module, and/or, acquiring that the data are data which conform to the predefined receiving operation event by analyzing the point-touch data of the touch screen captured by the touch screen processing module;
the predefined receiving hand gesture refers to an action of throwing, dropping, pointing, or opening figures.
the predefined receiving operation event is a one-touch event, a multi-touch event, a translation event, or a multi-point translation dispersion event.

The network module is used to, after the data transmission indication identifying module identifies the second indication, receive the indication from the correspondent device;
the playing control module is used to play the digital media contents indicated by the correspondent playing device.

The indication from the correspondent device is the digital media contents which are being played on the correspondent device or the address of the digital media contents; the playing control module is further used to, when the indication from the correspondent device refers to the digital media contents which are currently being played on the correspondent device, play the digital media contents; when the indication from the correspondent device is the address of the digital media contents, obtain and play the digital media contents corresponding to the address.

A system for transferring playing in the present invention comprises the abovementioned source and target devices, the module functions of both devices are not mentioned here.

The present invention further provides a device that has the functions of the abovementioned source device and target device, then present device can be used as the source device or the target device according to requirements of user; the specific module functions are not mentioned here.

The present invention enables the digital media content device easier to be manipulated, improves the ease of use of the digital media content device, and improves the user experience.

Of course, the present invention can also have a variety of other embodiments, and without departing from the spirit and essence of the present invention, a person skilled in the art may make various changes and modifications according to the present invention, and these corresponding changes and modifications shall belong to the protection scope of the appended claims of the present invention.

Those ordinarily skilled in the art can understand that all or some of steps in the abovementioned method may be completed by the programs instructing the relevant hardware, and the programs may be stored in a computer-readable storage medium, such as read only memory, magnetic or optical disk. Optionally, all or part of the steps of the abovementioned embodiments may also be implemented by using one or more integrated circuits. Accordingly, each module/unit in the abovementioned embodiment may be realized in the form of hardware or software function module. The present invention is not limited to any specific form of hardware and software combinations.

### Industrial Applicability

The embodiments of the present invention make the digital media content device more easily be manipulated, improve ease of the use of the digital media content device, and improves the user experience.

## Claims

1. A method for transferring playing of digital media contents, comprising:
after a first device identifies a first indication and/or a second device identifies a second indication, the second device playing digital media contents indicated by the first device to the second device;
wherein, the first device identifying the first indication refers to: by analyzing video data captured by a camera module, the first device acquiring that the video data are video data which conform to a predefined sending hand gesture or a predefined sending body action, and/or, by analyzing point-touch data of a touch screen captured by a touch screen processing module, the first device acquiring that the data are data which conform to a predefined sending operation event;
the second device identifying the second indication refers to: by analyzing video data captured by a camera module, the second device acquiring that the video data are video data which conform to a predefined receiving hand gesture or a predefined receiving body action, and/or, by analyzing point-touch data of a touch screen captured by a touch screen processing module, the second device acquiring that the data are data which conform to a predefined receiving operation event.

2. The method of claim 1, wherein,
the predefined sending hand gesture refers to an action of figure sweeping, or figure pinching, or figure grabbing, figure closing or two hands closing.

3. The method of claim 1, wherein,
said conforming to the predefined sending operation event refers to a one-touch event, a multi-touch event, a translation event or a multi-point translation aggregation event.

4. The method of claim 1, wherein,
the predefined receiving hand gesture refers to an action of throwing, dropping, pointing, or opening figures.

5. The method of claim 1, wherein,
the predefined receiving operation event is a one-touch event, a multi-touch event, a translation event or a multi-point translation dispersion event.

6. The method of claim 1, wherein,
the method further comprises the following execution process: after the first device identifies the first indication, the first device sending a request message for transferring the playing of digital media contents; after the second device receives the request message and identifies the second indication, the second device responding with a response of receiving the request message to the first device, after the first device receives the response, the first device indicating the digital media contents to the second device;
or,
after the second device identifies the second indication, the second device sending the first device a request message for transferring the playing of the digital media contents; after the first device receives the request message and identifies the first indication, the first device responding with a response of receiving the request message to the second device, and indicating the digital media contents to the second device.

7. The method of claim 1, wherein,
the method further comprises the following execution process: after the first device identifies the first indication, the first device sending the second device a request message for transferring the playing of the digital media contents, and indicating the digital media contents to the second device.

8. The method of claim 1, wherein,
the method further comprises the following execution process: after the second device identifies the second indication, the second device sending the first device a request message for transferring the playing of the digital media contents, after the first device receives the request message, the first device indicating the digital media contents to the second device.

9. The method of claim 6, 7 or 8, wherein,
the request message comprises a type indication of the digital media contents, and the type indication comprises one or a combination of the following parameters: image, video, audio, and desktop.

10. The method of any one of claims 1 to 8, wherein,
the first device indicating the digital media contents refers to: the first device sending the second device the digital media contents which are being played on the first device, or the first device sending the second device an address of the digital media contents;
the digital media contents are local digital media contents of the first device, or digital media contents obtained by the first device through a network.

11. A playing device, wherein,
the playing device comprises a camera module and/or a touch screen processing module, and the playing device further comprises a data transmission indication identifying module and a network module;
the data transmission indication identifying module is configured to: identify a first indication, which specifically refers to: by analyzing video data captured by the camera module, acquiring that the video data are video data which conform to a predefined sending hand gesture or a predefined sending body action, and/or, by analyzing point-touch data of the touch screen captured by the touch screen processing module, acquiring that the data are data which conform to a predefined sending operation event;
the network module is configured to: after the data transmission indication identifying module identifies the first indication, indicate digital media contents to a target playing device.

12. The device of claim 11, wherein,
the predefined sending hand gesture refers to an action of user hand sweeping, or figure pinching, or figure grabbing, figure closing or two hands closing.

13. The device of claim 11, wherein,
said conforming to a predefined sending operation event refers to a one-touch event, a multi-touch event, a translation event or a multi-point translation aggregation event.

14. The device of claim 11, wherein,
the network module is further configured to: send the target playing device the digital media contents or an address of the digital media contents which are currently being played on the playing device; the digital media contents are local digital media contents of the playing device or digital media contents obtained through a network.

15. A playing device, wherein,
the playing device comprises a camera module and/or a touch screen processing module, and the playing device further comprises a data transmission indication identifying module, a network module, and a playing control module;
the data transmission indication identifying module is configured to: identify a second indication, which specifically refers to: by analyzing video data captured by the camera module, acquiring the video data are video data which conform to a predefined receiving hand gesture or a predefined receiving body action, and/or, by analyzing point-touch data of a touch screen captured by the touch screen processing module, acquiring that the data are data which conform to a predefined receiving operation event;
the network module is configured to: after the data transmission indication identifying module identifies the second indication, receive an indication from a correspondent device;
the playing control module is configured to: play digital media contents indicated by the correspondent playing device.

16. The device of claim 15, wherein,
the predefined receiving hand gesture refers to an action such as throwing, dropping, pointing, or opening figures.

17. The device of claim 15, wherein,
the predefined receiving operation event is a one-touch event, a multi-touch event, a translation event, a multi-point translation dispersion event.

18. The device of claim 15, wherein,
the indication from the correspondent device refers to digital media contents or an address of the digital media contents which are being played on the correspondent device;
the playing control module is further configured to: when the indication from the correspondent device refers to the digital media contents which are being played on the correspondent device, play the digital media contents; when the indication from the correspondent device is the address of the digital media contents, obtain and play the digital media contents corresponding to the address.

19. A system for transferring playing of digital media contents, comprising the device of any one of claims 11 to 14, and further comprising the device of any one of claims 15 to 18.
